## Europäisches Patentamt
## European Patent Office
## Office européen des brevets

(11) Publication number: **0 035 916**
**B1**

(12) **EUROPEAN PATENT SPECIFICATION**

(45) Date of publication of patent specification: **22.08.84**

(21) Application number: **81301013.9**

(22) Date of filing: **11.03.81**

(51) Int. Cl.³: **B 29 D 27/00, B 29 F 1/022, B 29 F 1/06**

(54) **Conversion apparatus for injection moulding machines.**

---

(30) Priority: **12.03.80 GB 8008426**

(43) Date of publication of application:
**16.09.81 Bulletin 81/37**

(45) Publication of the grant of the patent:
**22.08.84 Bulletin 84/34**

(84) Designated Contracting States:
**DE GB**

(56) References cited:
**DE-B-2 506 785**
**GB-A-1 493 300**
**US-A-3 058 161**
**US-A-3 596 318**
**US-A-4 096 218**

(73) Proprietor: **RANK XEROX LIMITED**
**338 Euston Road**
**London NW1 3BH (GB)**

(72) Inventor: **van der Vord, Richard Charles A.**
**9 Fir View Road Ruspidge**
**Cinderford Gloucester (GB)**

(74) Representative: **Prior, Nicholas J. European**
**Patent Attorney et al**
**Rank Xerox Patent Department 338 Euston Road**
**London NW1 3BH (GB)**

Courier Press, Leamington Spa, England.

## Description

This invention relates to a conversion apparatus for converting an injection moulding machine in which the platens have a fixed closed position into one which permits expansion of a mould mounted between the platens whereby it is suitable for moulding foam plastics articles.

The injection moulding of foam plastics articles is typically carried out by injecting a molten mixture of a plastics material and a blowing agent under pressure into a mould cavity which can be enlarged after the mixture has been injected to allow the mixture to foam. The injection moulding of foam plastics materials using an expanding mould is described for example in US—A—3058 161. In the past, as described for example in US—A—3596319, and US—A—4096218, such injection moulding has been achieved using a machine in which the mould is mounted between platens relatively movable toward and away from each other for fully closing the mould to form a closed cavity into which a foamable material is injected to fill the cavity, for partially opening the assembly to enlarge the closed cavity so the material can foam, and for fully opening the mould assembly for removal of the completed article. Such range of movement of the platens is not required for the injection moulding of solid (unfoamed) articles and injection moulding machines for such articles have been constructed with platens which have a fixed closed position. It has thus not previously been possible to use such an injection moulding machine to produce foamed plastics articles and specially constructed machines as described above have had to be made specifically for this purpose.

GB—A—1493300 which shows the features of the precharacterising part of claim 1 discloses a machine for injection moulding ultra high molecular weight polyethylene in which a mould carrier mounted on one of the platens is movable relative to the platen for adjusting the volume of the mould cavity. Utilising this arrangement the volume of the cavity is made slightly larger than that of the final article when the polymer is injected into the mould cavity and the cavity is then reduced to the desired volume.

It is an object of the invention to provide for the production of foamed plastics articles in an expanding mould in an injection moulding machine in which the platens have a fixed closed position.

To this end the invention provides a conversion apparatus for converting an injection moulding machine in which two platens have a fixed closed position into one in which a mould part mounted between the platens is operated to move relative to the platens, said apparatus comprising an attachment adapted to be mounted on one of the platens, said attachment including a mould carrier movable relative to the platen, hydraulic drive means for moving the mould carrier, and means for locking the mould carrier, characterised in that valve means and a control system are provided firstly to control the hydraulic drive means in such a manner that the mould part is in a fully closed position when plastics material is injected, and secondly to retract the mould carrier following said injection for partially opening the mould.

The hydraulic drive means may operate only to move the mould carrier to its advanced position, retraction of the mould carrier being effected by separate means such as a biassing means or hydraulic drive means mounted on the fixed platen, for example incorporated in the mould assembly. Alternatively a double acting hydraulic drive may serve to drive the carrier in both directions.

In order that the invention may be more readily understood, embodiments thereof will now be described with reference to the accompanying drawings, in which:—

Figure 1 is a schematic side elevation of one embodiment of injection moulding machine incorporating the invention;

Figure 2 is a side view of a modified form of injection moulding apparatus according to the invention showing the mould open at the start of an operating cycle;

Figure 3 shows the apparatus of Figure 2 with the mould fully closed for injection of moulding material;

Figure 4 shows the apparatus of Figure 2 with the mould partially open for foaming of the moulding material;

Figure 5 shows the apparatus of Figure 2 with the mould fully open at the end of the cycle; and

Figure 6 is a side elevation of another embodiment of injection moulding apparatus according to the invention.

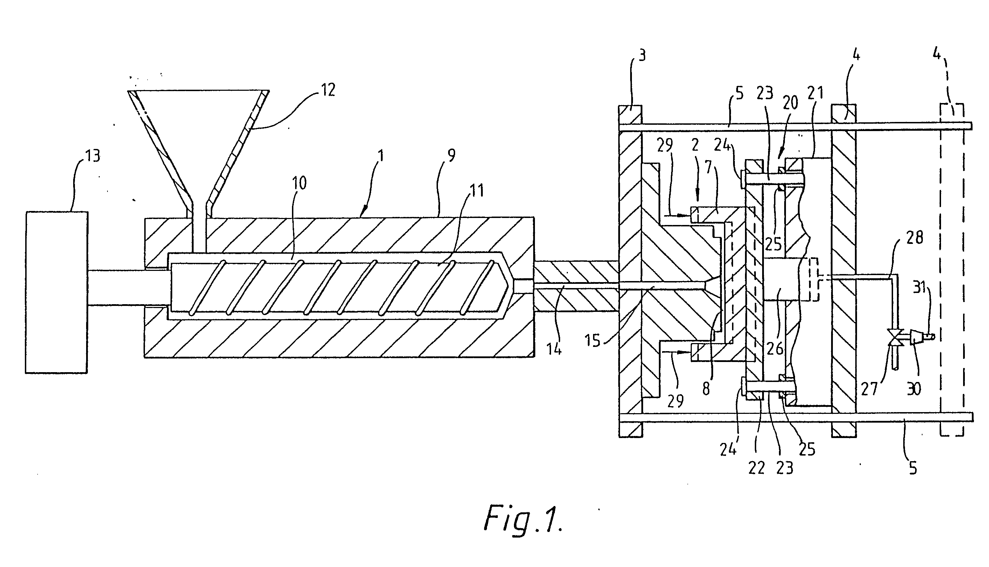

Referring to the drawings, Figure 1 shows schematically an exemplary form of injection moulding machine incorporating the present invention. The machine comprises a plasticator 1 for supplying injection moulding material to a mould 2 mounted between a pair of relatively movable platens 3, 4 of which in the embodiment illustrated the platen 3 is fixed and the platen 4 is movable relative thereto on rails 5 between an open position shown in broken lines and a fixed closed position shown in full lines. The mould 2 comprises mould halves or parts 6, 7 respectively mounted on the platens 3, 4 and together defining a mould cavity 8. The plasticator has a housing 9 defining an elongated mixing chamber 10 in which is arranged a plasticator screw 11. Plastics material is delivered to the chamber 10 by a hopper 12 and the screw 11 is driven by a motor 13. A passage 14 leads from the forward end of the chamber through the fixed platen 3 to connect with a passage 15 in the mould half 6 leading to the cavity 8.

In accordance with the invention the injection moulding machine is adapted for use with an expanding mould and to this end apparatus 20 is mounted between the platens 3, 4 for partially opening the mould 2 while the platens are in their closed positions to enlarge the closed cavity 8, whereby the plastics material injected into the cavity may foam. As shown, the apparatus comprises an attachment 21 which is mounted on the platen 4 and includes a mould carrier 22 to which the mould half 7 is attached. The mould carrier 22 is attached to the platen 4 and movable relative to the platen between advanced and retracted positions in which, with the platens closed, the mould 2 is respectively fully closed as shown in full lines and partially open, in which case the mould half 7 is located as shown in broken lines.

The mould carrier 22 is slideably mounted on guide pins 23 and its movement is limited by stops, 24, 25 which respectively define the advanced and retracted positions of the mould carrier. The carrier 22 is driven to its advanced position in which the mould is fully closed by a hydraulic ram 26 and is locked in its advanced position during injection of moulding material by closing pressure control valve 27 in supply line 28. The supply line 28 together with a return line 31 is connected to the moulding machine's hydraulic circuit. For retracting the carrier partially to open the mould the hydraulic pressure is released and biassing means represented by arrows 29 drive the carrier plate against stops 25. Appropriate seals are provided between the mould halves.

In operation, the platen 4 is moved to its closed position and the mould carrier 22 is driven to its advanced position, in which the mould is fully closed as shown in full lines, and locked in this position. A desired injection moulding material mixed with a suitable blowing agent is fed into chamber 10 through hopper 12 where it is plasticated and becomes molten. The molten mixture is fed under sufficient pressure into the mould cavity that it does not foam. When the injection is complete, the mould carrier 22 is unlocked and the hydraulic pressure released so that the mould half 7 is moved by the biassing means 29 to the position shown in dotted lines to enlarge the mould cavity so that the moulding material may foam and fill the enlarged cavity. The speed of the carrier plate during this movement is controlled by an orifice plate 30 in the return line 31. The foamed plastics material is allowed to cool and then the platens are moved apart to fully open the mould and the completed article is ejected in the normal way.

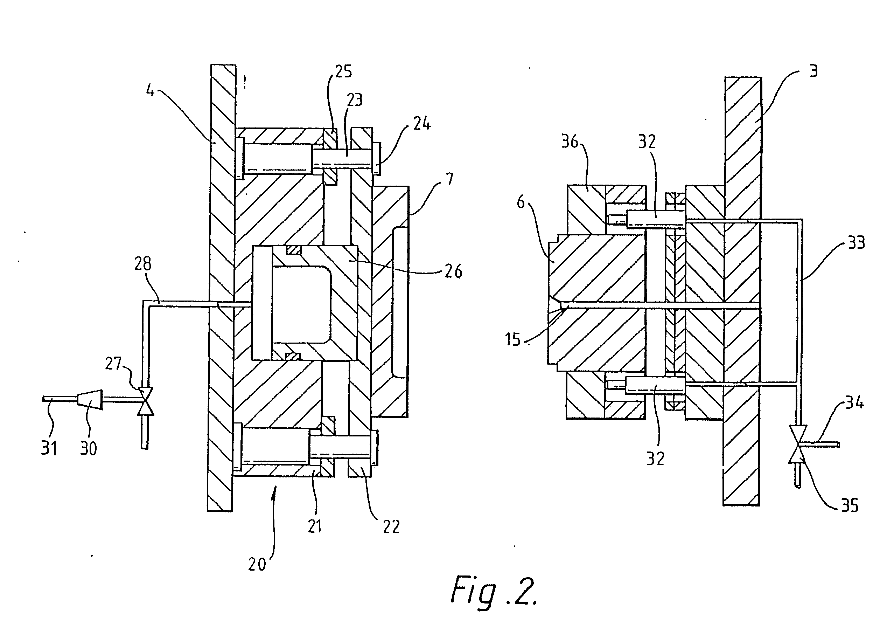

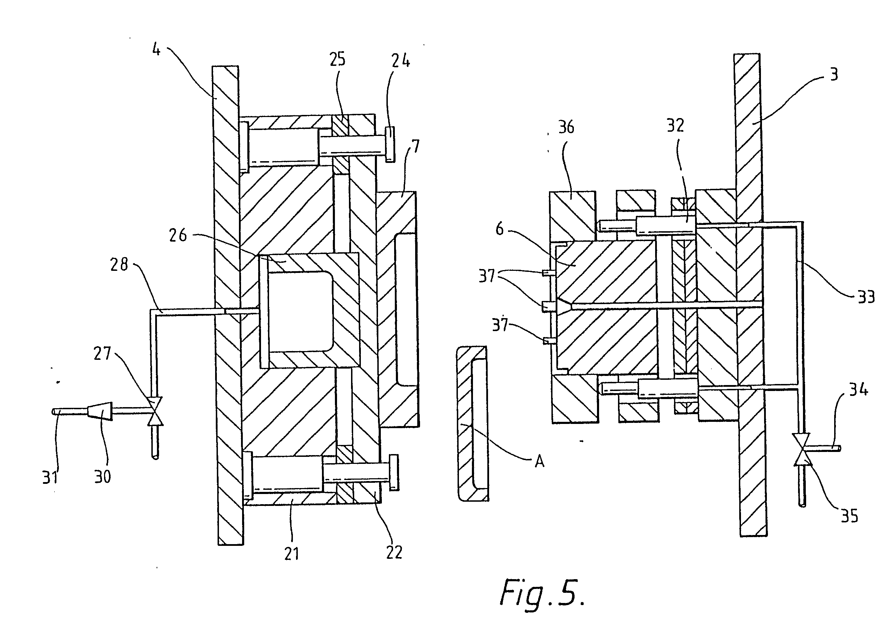

A modified embodiment of injection moulding apparatus according to the invention is illustrated in Figures 2 to 5 which respectively show different stages in the operation of the apparatus. In this embodiment there are two hydraulic rams 26 (only one of which is seen) for driving the mould carrier 22 to its advanced position in which the mould is fully closed and partial opening of the mould is effected by four hydraulic rams 32 (only two being seen) mounted on the fixed platen 3. These rams 32 are connected to the machine's hydraulic circuit by supply line 33 and return line 34 via a sequence valve 35. In this embodiment also the mould half 6 of the expanding mould includes a movable ring-like stripper plate 36 which as described below moves during expansion of the mould. The rams 32 act directly on the plate 36 and act indirectly on the mould half 7 through the plate 36 to partially open the mould.

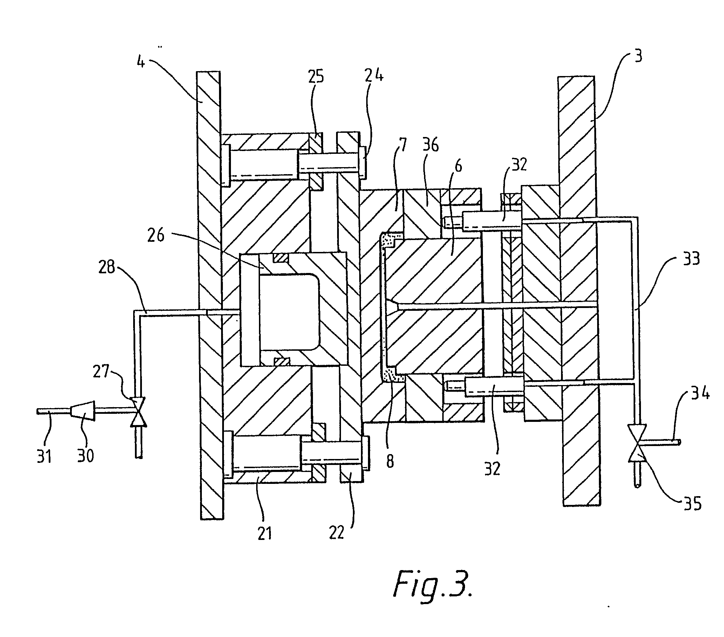

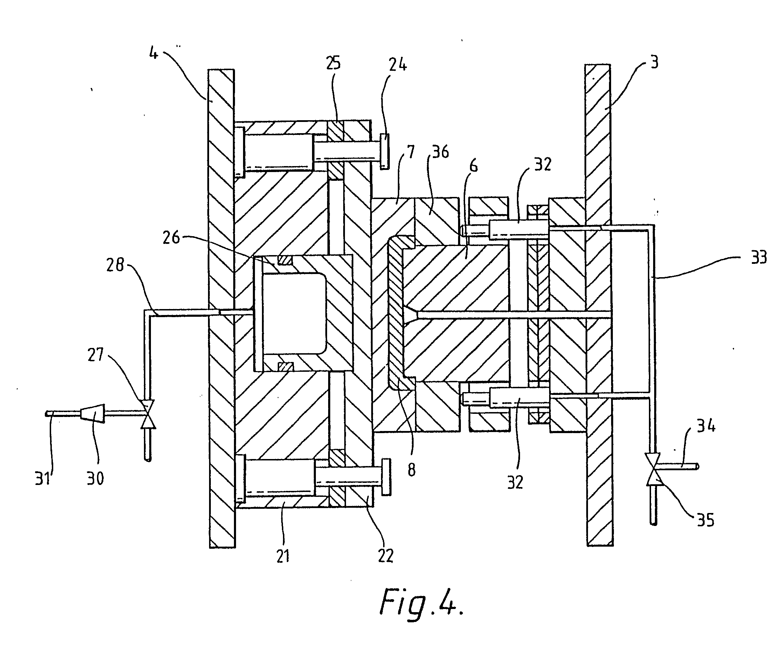

The apparatus is shown in Figure 2 at the start of an operating cycle with the platens 3, 4 in their open positions and the mould halves 6, 7 separated. The rams 26 are pressurised so that the carrier plate is advanced to the position seen in both Figures 2 and 3, and then the platen 4 is moved to the fixed closed position seen in Figure 3. The sequence valve 35 connects the rams 32 to the return line 34 and the plate 36 is retracted by the moving mould half 7. With the mould fully closed as shown in Figure 3, the pressure applied to rams 26 is intensified and all hydraulic lines are locked. The injection moulding material is now injected into the mould cavity 8. When the material has been injected into the cavity 8, pressure control valve 27 is opened to connect the rams 26 with return line 31 and the sequence valve 35 is opened to pressurise the rams 32. As shown in Figure 4 the rams 32 advance the plate 36 and through it the mould half 7 to expand the mould cavity 8 which now adopts the shape of the article being moulded. The movement of plate 36 and mould half 7 is limited by the mould carrier 22 abutting stops 25. When the cavity is fully expanded, the pressure to rams 32 is intensified and the sequence valve is closed. This condition is maintained for sufficient time to complete foaming of the material and cooling of the resultant completed article. The movable platen 7 is then retracted to its fully open position and the sequence valve 35 re-opened. The rams 32 move forward advancing the stripper plate 36 which carries ejector pins 37 to eject the completed article A. The sequence valve is adjusted to connect the rams 32 to the return line 34, and the apparatus is ready for another cycle. The operation of the apparatus 20 may be controlled by any suitable control system such as a microprocessor controlling solenoid actuated valves.

In a preferred embodiment the line pressure in the supply lines 28, 33 is 138 bar and the pressure control valve 27 is locked at 17 bar to hold the carrier 22 in its advanced position during closure of the mould. The pressure is intensified during injection 232 bar at the rams 26 giving a pressure of 877 bar at the mould. The injection moulding material is injected at 232 bar. During partial opening of the mould the sequence valve 35 is closed at 17 bar.

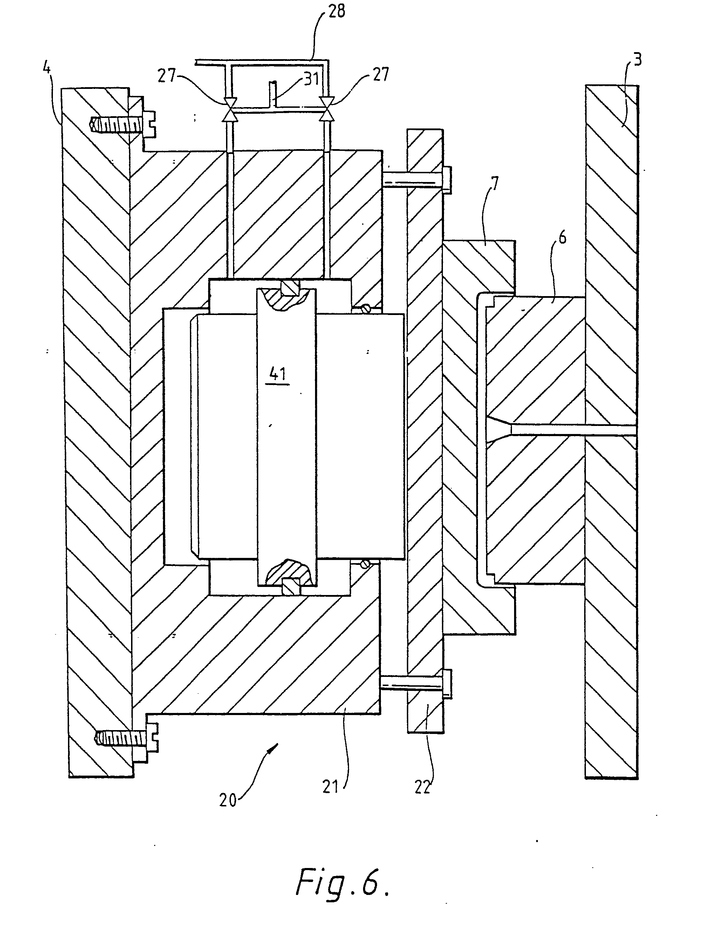

In the embodiment shown in Figure 6, the rams 26 are replaced by a double acting piston 41 which slides in a cylinder block 42 attached to the movable platen 7. Pressure is supplied to opposite sides of the piston through supply lines 28 via pressure control valves 27 and the latter are switchable to a common return line 31. As in previous embodiments, the movement of the mould carrier 22 attached to the piston 41 is limited by stops 24, 25. In this embodiment, the rams 26 are eliminated since the mould carrier 22 is driven in both directions by the piston 41. However a, suitably hydraulically operated, stripper plate (not shown) may be incorporated in the mould assembly in the usual way.

It will be understood from the foregoing that by providing the apparatus 20 comprising the movable carrier plate 22 and its hydraulic drive in a conventional injection moulding machine of the kind typically used for making solid plastics articles, the machine is converted to one capable of use with an expanding mould suitable for making foamed plastics articles. Such apparatus may be partially or completely embodied in a mould assembly.

While specific embodiments of the invention have been described, it will be understood that various modifications may be made without departing from the scope of the invention as defined in the appended claims. For example, in the embodiment of Figure 1, the biassing means (e.g. springs) may be replaced by hydraulic means and in the embodiment of Figures 2 to 5 the hydraulic rams 26 may be replaced by biassing means.

It will be understood that the fixed closed position of the injection moulding machine platens may be adjustable to accommodate different sizes of mould assembly.

## Claims

1. Conversion apparatus (20) for converting an injection moulding machine in which two platens (3, 4) have a fixed closed position into one in which a mould part (2) mounted between the platens is operated to move relative to the platens, said apparatus comprising an attachment (21) adapted to be mounted on one of the platens (4), said attachment including a mould carrier (22) movable relative to the platen (4), hydraulic drive means (26, 41) for moving the mould carrier, and means for locking the mould carrier, characterised in that valve means (27, 30) and a control system are provided firstly to control the hydraulic drive means (26, 41) in such a manner that the mould part (2) is in a fully closed position when plastics material is injected, and secondly to retract the mould carrier (22) following said injection for partially opening the mould.

2. Conversion apparatus according to Claim 1, in which the hydraulic drive comprises one or more rams (26) adapted to be mounted on said one platen (4) for driving the mould carrier (22) towards its advanced position, separate means (29, 32) serving to drive the carrier (22) in the opposite direction for enlarging the mould cavity (8).

3. Conversion apparatus according to Claim 7, in which the hydraulic drive comprises a double acting arrangement (41) adapted to be mounted on said one platen (4) for driving the mould carrier (22) in both directions.

## Patentansprüche

1. Umwandlungsvorrichtung (20) zum Umwandeln einer Spritzgießmaschine, in welcher zwei Platten (3, 4) eine festgelegte Schließposition aufweisen, in eine Maschine, in welcher eine zwischen den Platten angebracht Gießformhälfte (2) zur Bewegung relativ zu den Platten betätigt wird, wobei die genannte Vorrichtung eine zur Befestigung an einer der Platten (4) angepaßte Zusatzeinrichtung (21) aufweist, die einen relativ zu der Platte (4) bewegbaren Gießformträger (22), eine hydraulische Antriebseinrichtung (26, 41) zum Bewegen des Gießformträgers und Mittel zum Sperren des Gießformträgers umfaßt, dadurch gekennzeichnet, daß Ventilmittel (27, 30) und ein Steuersystem vorgesehen sind, erstens um die hydraulische Antriebseinrichtung (26, 41) derart zu steuern, daß die Gießformhälfte (2) sich in einer völlig geschlossenen Position befindet, wenn Kunststoffmaterial eingespritzt wird, und zweitens um anschließend an das genannte Einspritzen den Gießformträger (22) zum teilweisen Öffnen der Gießform zurückzuziehen.

2. Umwandlungsvorrichtung nach Anspruch 1, in welcher der Hydraulikantrieb einen oder mehrere zur Befestigung an die genannte eine Platte (4) zum Verfahren des Gießformträgers (22) in Richtung seiner vorgerückten Position angepaßte Stempel (26) sowie zum Verfahren des Trägers (22) in die entgegengesetzte Richtung zur Vergroßerung des Gießformhohlraumes (8) dienende separate Mittel (29, 30) umfaßt.

3. Umwandlungsvorrichtung nach Anspruch 1, in welcher der Hyraulikantrieb eine doppeltwirkende Anordnung (41) umfaßt, die angepaßt ist, an der genannten einen Platte (4) zum Verfahren des Gießformträgers (22) in beide Richtungen angebracht zu werden.

## Revendications

1. Appareil de conversion (20) pour transformer une machine de moulage par injection, dans laquelle deux plateaux (3, 4) ont une position fermée fixe, en machine dans laquelle une partie de moule (2) montée entre les plateaux est actionnée de manière à se déplacer par rapport aux plateaux, l'appareil comprenant un organe auxiliaire (21) destiné à être monté sur l'un des plateaux (4), l'organe auxiliaire comportant un support de moule (22) pouvant se déplacer par rapport au plateau (4), un moyen d'entraînement hydraulique (26, 41) pour déplacer le support de moule, et un moyen pour bloquer le support de moule, caractérisé en ce qu'un moyen de valve (27, 30) et un système de commande sont prévus en premier lieu pour commander le moyen d'entraînement hydraulique (26, 41) de façon que la partie de moule (2) se trouve dans la position de fermeture totale lorsque le matériau plastique est injecté, et en second lieu pour ramener en arrière le support de moule (22) à la suite de l'injection et ouvrir partiellement le moule.

2. Appareil de conversion selon la revendication 1, dans lequel le moyen d'entraînement hydraulique comprend un ou plusieurs pistons (26) destinés à être montés sur un plateau (4) pour entraîner le support de moule (22) vers sa position avancée, un moyen séparé (29, 32) servant à entraîner le support (22) dans la direction opposée pour augmenter les dimensions de la cavité (8) du moule.

3. Appareil de conversion selon la revendication 1, dans lequel le moyen d'entraînement hydraulique comprend un agencement (41) à double effect, destiné à être monté sur le plateau (4) pour entraîner le support de moule (22) dans les deux directions.

Fig.1.

Fig .2.

0 035 916

*Fig.3.*

Fig.4.

0 035 916

Fig. 5.

Fig.6.